# EUROPEAN PATENT SPECIFICATION

(11) **EP 1 270 334 B1**
(45) Date of publication and mention of the grant of the patent: **28.09.2005**
(21) Application number: 02012136.4
(22) Date of filing: 01.06.2002
(51) Int. Cl.: B60R 13/00

(54) **Arrangement for fastening the badge on the front side of a motor-vehicle**
Befestigungsanordnung eines Emblems an die vordere Seite eines Kraftfahrzeugs
Fixation d'un emblème sur la partie avant d'un véhicule

(30) Priority: 25.06.2001 IT PN20010021 U
(43) Date of publication of application: 02.01.2003
(73) Proprietor: Plastal S.p.A., 33170 Pordenone (IT)
(72) Inventor: Piazzon, Marco, 31030 Casier, Treviso (IT)
(74) Representative: Giugni, Valter

(56) References cited:
- EP-A- 0 132 485
- DE-U- 20 012 642
- PATENT ABSTRACTS OF JAPAN vol. 005, no. 087 (M-072), 6 June 1981 (1981-06-06) & JP 56 034544 A (NISSAN MOTOR CO LTD), 6 April 1981 (1981-04-06)
- PATENT ABSTRACTS OF JAPAN vol. 1997, no. 11, 28 November 1997 (1997-11-28) & JP 09 175285 A (TOYOTA AUTOM LOOM WORKS LTD;TOYOTA MOTOR CORP), 8 July 1997 (1997-07-08)

## Description

The present invention refers to an improved arrangement for fastening the badge or escutcheon of the manufacturing company, or any similar element, to the front side of a motor-vehicle.

The front side of motor-vehicles is generally known to be substantially occupied by the grille of the engine cooling radiator, and the badge or escutcheon of the manufacturing company is attached to such a grille, along with further ornaments as may be possibly used to decorative purposes or as an identification for the model or type of motor-vehicle.

The radiator grille is currently made of a plastic material, such as for instance glass-reinforced nylon, and is then painted. The badge or escutcheon is also made of a plating-grade plastic material that is then chromium-plated. After chromium-plating, the badge is attached, e.g. by adhesive-bonding or riveting (vibrationless welding), on to a support. The resulting assembly is then fitted in the grille of the radiator in a removable manner.

The connection of the badge support to the grille is usually carried out with the aid of a spring of steel, the end portions of which are profiled in such a manner as to be adapted to engage corresponding receptacles provided in the two elements to be connected.

This prior-art solution, however, turns out to be rather complicated and expensive, since it requires processing and assembling a number of different parts. The major drawback may be considered as deriving from the problems that are generally encountered in moulding the parts, as well as making the related mould, due to the need for the above cited receptacles to be obtained in the grille. To such a purpose, in fact, the need arises for a specific movement to be specially figured out and implemented inside such a mould.

DE 200 12 642 A discloses an arrangement for fastening a badge according to the preamble of claim 1.

It therefore is a purpose of the present invention to provide an improved technical solution for the arrangement used to fasten the badge or escutcheon to the radiator grille of motor-vehicles, as well as for making the same badge or escutcheon, in such a manner as to make manufacturing and assembling of such component parts much more simple and rational.

This aim is reached in an arrangement with the features of claim 1.

Features and advantages of the present invention will be more readily understood from the description that is given below by way of non-limiting example with reference to the accompanying drawings, in which:
- Figure 1 is a schematic view of the front part of a motor-vehicle provided with an arrangement according to the present invention;
- Figure 2 is a partial cross-sectional view of an arrangement according to the prior-art;
- Figure 3 is a partial cross-sectional view of an arrangement according to the present invention.

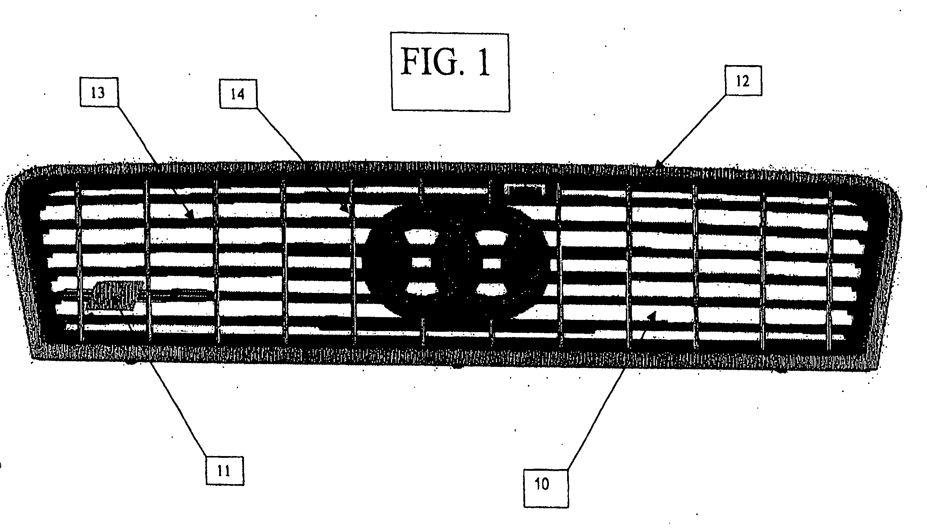

Figure 1 illustrates, on a reduced scale, the front grille 10 of a motor-vehicle, to which there is attached a badge 11.

The grille 10 is usually formed by a peripheral frame 12 and a set of horizontal slats 13 and vertical slats 14 intersecting each other so as to constitute the surface for the cooling air of the radiator of the motor-vehicle to flow therethrough. As already pointed out, the whole grille is made of plastic material.

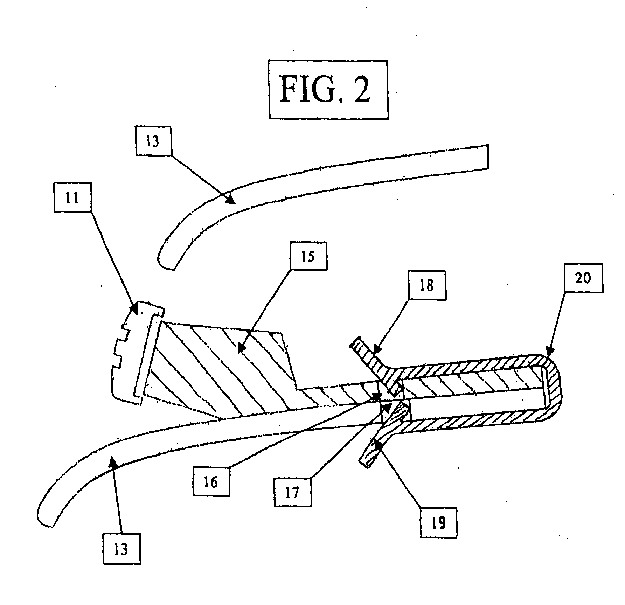

Figure 2 is a cross-sectional view of a detail of the assembly of the badge 11 on the grille 10 according to the prior-art. It can be noticed that the badge 11 is attached, preferably by adhesive-bonding with the aid of bi-adhesive tape or by hot riveting, on to the front end portion of a profiled support 15, so as to be able to fit in between two contiguous horizontal slats 13 of the grille and to be secured to one of said slats. To this purpose, the rear portion of the support 15 and the corresponding portion of the slat 13 are provided with respective through-apertures 16 and 17. In these apertures are inserted the end portions, appropriately shaped so as to feature respective inclined barbs 18 and 19, of a steel spring 20. The spring 20 is bent into a C-shaped configuration and clamps the rear end portions of the support 15 and the corresponding slat 13 elastically together. This solution has such drawbacks as described in the introductory part of this description.

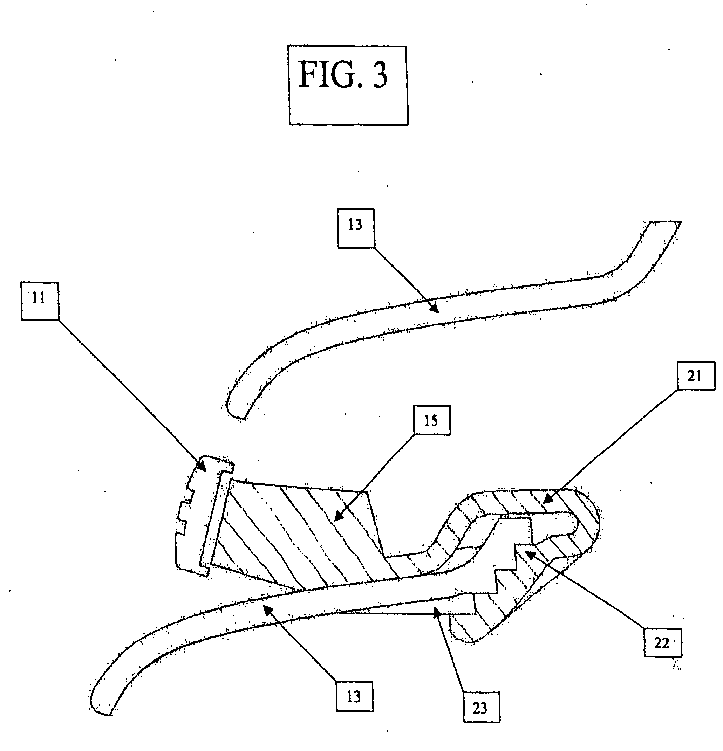

Figure 3 on the contrary illustrates the innovatory solution according to the present invention, wherein it should be noticed that like elements have been given like numerals. In this new solution, the badge 11 is attached in a traditional manner to the front portion of a support 15. The latter, however, has its rear end portion 21 folded into a hook-like configuration Furthermore, the inner surface of the rear end portion 21 ends in a serrated portion 22. Correspondingly, the slat 13 of the grille 10 features a similar serrated portion 23 which is engaged by the serrated portion 22 of the support 15 so as to firmly secure the badge 11 and hold it in position.

In order to insert and fasten the badge 11 on to the grille 10 use is made of the elasticity of the elastic material, which the support 15 is made of, and in particular the flexibility of the rear end portion 21 of the support 15. Therefore, all it takes is to simply insert the rear end portion 21 between two contiguous slats 13, while forcing the insertion by bending the support 15 downwards until the rear end portion 21 of the support 15 passes over the rear end portion of the slat 13 and gets engaged therewith.

Such a mutual engagement of the serrated portions 22 and 23 ensures a firm attachment of the badge 11 on the grille 10, while at the same time avoiding possible aerodynamic suction effects when the motor-vehicle is running.

Finally, the new solution is advantageous owing also to the fact that, if required, it enables the badge or escutcheon 11 to be made integral with, i.e. in a single-piece construction with the respective support 15, using to this purpose the so-called, per sè known "selective chromium-plating" technique. In fact, with the use of rotary moulds for dual-component moulding the possibility exists for two different materials, i.e. a plating-grade material and a non-plating-grade one, to be moulded in a single shot into a badge with the related support. Solely the zones intended for exposure to view will be then chromium-plated during the subsequent plating process, thereby ensuring the required aesthetical effect.

## Claims

1. Arrangement for fastening a badge (11), or a similar element, on to the radiator grille (10) of a motor-vehicle, said arrangement comprising a support (15) of plastics that is removably mountable on to the grille, and has a rear end portion (21) which is folded into a hook-like shape, so as to be capable of being fitted elastically on one of the profiled members (13) of the grille, arrangement **characterized in that** said rear end portion (21) of the support (15) for the badge or escutcheon (11) has a serrated terminal portion (22) on the inner surface of said rear end portion (21) that is adapted to engage a corresponding serrated portion (23) on one of said profiled members (13) of the grille (10).

2. Arrangement according to claim 1, **characterized in that** the badge or escutcheon (11) is made as a single piece integral with the related support (15) with the aid of the selective chromium-plating technique.

## Patentansprüche

1. Anordnung zum Anbringen eines Emblems (11) oder eines ähnlichen Elementes am Kühlergrill (10) eines Kraftfahrzeugs, wobei die Anordnung einen Träger (15) aus Kunststoff umfasst, der abnehmbar an dem Grill angebracht werden kann und einen hinteren Endabschnitt (21) hat, der in eine hakenartige Form gebogen ist, so dass er elastisch an einem der Profilelemente (13) des Grills angebracht werden kann, und die Anordnung **dadurch gekennzeichnet ist, dass** der hintere Endabschnitt (21) des Trägers (15) für das Emblem oder Schild (11) einen gezahnten Abschlussabschnitt (22) an der Innenfläche des hinteren Endabschnitts (21) hat, der so eingerichtet ist, dass er mit einem entsprechenden gezahnten Abschnitt (23) an einem der Profilelemente (13) des Grills (10) in Eingriff kommt.

2. Anordnung nach Anspruch 1, **dadurch gekennzeichnet, dass** das Emblem oder Schild (11) als ein Teil integral mit dem dazugehörigen Träger (15) mit Hilfe des selektiven Verchromungsvertahrens hergestellt wird.

## Revendications

1. Dispositif pour fixer un insigne (11) ou un élément similaire sur la grille (10) du radiateur d'un véhicule à moteur, ledit dispositif comprenant un support (15) en plastique qui peut être monté de manière amovible sur la grille, et possède une partie d'extrémité arrière (21) qui est pliée selon une forme de crochet, afin de pouvoir être montée de manière élastique sur l'un des éléments profilés (13) de la grille, dispositif **caractérisé en ce que** ladite partie d'extrémité arrière (21) du support (15) destiné à l'insigne ou écusson (11) a une partie terminale dentelée (22) sur la surface interne de ladite partie d'extrémité arrière (21) qui est adaptée pour venir en prise avec une partie dentelée (23) correspondante sur l'un desdits éléments profilés (13) de la grille (10).

2. Dispositif selon la revendication 1, **caractérisé en ce que** l'insigne ou écusson (11) est réalisé comme une pièce d'un seul tenant solidaire du support relatif (15) à l'aide de la technique de chromage sélective.
